# EUROPÄISCHE PATENTSCHRIFT

(11) **EP 2 585 257 B1**
(45) Veröffentlichungstag und Bekanntmachung des Hinweises auf die Patenterteilung: **10.08.2016**
(21) Anmeldenummer: 11726447.3
(22) Anmeldetag: 21.06.2011
(51) Int. Cl.: B25J 17/02, B23Q 1/54, F16M 13/02, F16H 21/46

(54) **HEXAPOD**
STEWART PLATFORM
HEXAPODE

(30) Priorität: 28.06.2010 DE 102010025275
(43) Veröffentlichungstag der Anmeldung: 01.05.2013
(73) Patentinhaber: Schwab, Martin, 91729 Obererlbach (DE)
(72) Erfinder: Schwab, Martin, 91729 Obererlbach (DE)
(74) Vertreter: Blaumeier, Jörg
(86) Internationale Anmeldenummer: PCT/EP2011/060338
(87) Internationale Veröffentlichungsnummer: WO 2012/000840

(56) Entgegenhaltungen:
- WO-A1-2004/033161
- SU-A1- 1 049 244
- US-B1- 6 196 081

## Beschreibung

Die Erfindung betrifft einen Hexapod, umfassend eine vorzugsweise plattenförmige Aufnahme, an der wenigstens fünf, vorzugsweise sechs in separaten Gelenken gelagerte Stäbe angeordnet sind, wobei jeder Stab mit seinem anderen Ende gelenkig an einer Halterung angeordnet ist, wobei alle Halterungen längs einer Kreisbahn bewegbar sind.

Ein Hexapod ist ein Stell- oder Steuermittel, mit dem es möglich ist, einen beliebigen, auf der vorzugsweise plattenförmigen Aufnahme befindlichen Gegenstand in seiner Raumlage zu verändern. Hierzu ist die Aufnahme, bei der es sich beispielsweise auch um einen Ring oder Ähnliches handeln kann, gelenkig mit wenigstens fünf, vorzugsweise sechs in separaten Gelenken gelagerten, in ihrer Länge gleichbleibenden Stäben verbunden, wobei jeder Stab mit seinem anderen Ende gelenkig an einer Halterung angeordnet ist. Jede Halterung ist beweglich auf einer gemeinsamen Kreisschiene angeordnet, kann also längs der über die Kreisschiene definierten Kreisbewegungsbahn verfahren werden. Durch Bewegung der Halterungen ändert sich zwangsläufig der Abstand der an ihnen gelenkig gelagerten Stabenden, wobei sich je nach Abstand der Stäbe zwangsläufig auch der Winkel der entsprechenden Stäbe untereinander und damit die Raumlage der an der Aufnahme befindlichen Stabgelenke ändert. Es sich hierdurch alle sechs Freiheitsgrade der beweglichen Aufnahme steuerbar. Die ansteuerbaren Positionen sind jedoch aufgrund der Führung der Halterungen an einer gemeinsamen Kreisschiene begrenzt, spezielle Stellaufgaben sind mit einem solchen Hexapod nicht bewerkstelligbar.

Ein weiteres Problem bei einem bekannten Hexapod der beschriebenen Art ist, dass die an der gemeinsamen Kreisringbahn beweglich geführten Halterungen jeweils mit einem eigenen Antriebsmittel, also einem eigenen Antriebsmotor verbunden sind, der mitsamt der Halterung bewegt wird. D. h., dass entlang der Kreisringschiene nicht nur die Halterungen, sondern auch ihre Antriebsmotoren, die beispielsweise über einen Zahnradmechanismus mit einer entsprechenden Kreisringschienenverzahnung kämmen, bewegt werden. Da jeder Antriebsmotor mit einer Kabelverbindung gekoppelt ist, kommt es bei einer grundsätzlichen möglichen Drehung der Aufnahme um 360°, wenn also alle Halterungen um 360° auf der Kreisbahn verfahren, zu einem Aufwickeln der Kabel. D. h., dass 360°-Drehungen nur begrenzt möglich sind.

Aus SU 1 049 244 A1 ist ein Hexapod der eingangs genannten Art bekannt. Die Halterungen sind als Trägerringsegmente ausgeführt und bilden den Rotor eines elektromotorischen Antriebs. Der Stator ist mittels eines ferromagnetischen Ringes mit variablem Querschnitt ausgeführt. Im Inneren dieses Ringstators sind die Trägerringsegmente angeordnet. Jedes Trägerringsegment besteht aus zwei T-förmigen Eisenkernen, die Ankerwicklungen tragen. Werden diese bestromt, bildet sich ein Magnetfeld aus, das zur Bewegung der Trägerringsegmente mit dem ferromagnetischen Statorring zusammenwirkt.

Aus US 6 196 081 B1 ist ein Hexapod bekannt, bei dem sechs Trägerringsegmente, an denen jeweils ein Stab gelenkig angeordnet ist, der wiederum mit der Aufnahme gekoppelt ist, an eine gemeinsamen Kreisschiene beweglich angeordnet sind.

WO 2004/033161 A1 beschreibt schließlich eine Stelleinrichtung, bei der an drei drehbar gelagerten Ringen jeweils eine Halterung angeordnet ist, wobei an jeder Halterung wiederum zwei Stäbe gelenkig angeordnet sind, die mit ihrem anderen Ende wiederum gelenkig in Aufnahmen einer kardanische Stabverbindung, die zu einem Werkstückspanfutter führt, aufgenommen sind. Die Stäbe sind paarweise so angeordnet, dass sie Parallelogramme bilden. Die Rotation der einzelnen Ringe erfolgt über Riementriebe.

Der Erfindung liegt damit das Problem zugrunde, einen verbesserten Hexapod anzugeben.

Zur Lösung dieses Problems ist bei einem Hexapod der eingangs genannten Art gemäß einer ersten Erfindungsalternative vorgesehen, dass jede Halterung an einem separaten Trägerring angeordnet ist, wobei der jeweilige Trägerring samt der an ihm angeordneten Halterung bewegbar ist, und dass jeder Trägerring den Rotor oder einen Teil eines Rotors eines elektromotorischen Antriebsmittels umfassend weiterhin einen dem jeweiligen Trägerring zugeordneten ringförmigen Stator bildet.

Die PCT-Anmeldung WO 2011/089198 A1 gehört zum Stand der Technik im Sinne vom Artikel 54(3) EPÜ, Artikel 153 EPÜ und Regel 165 EPÜ. In dieser Anmeldung wird ein Hexapod mit separaten Trägerringen offenbart. Jedoch werden die Trägerringe durch lagefeste Stellmotoren angetrieben, deren Abtriebsritzel jeweils mit einer Verzahnung der Trägerringe zusammenwirken.

Bei dem erfindungsgemäßen Hexapod ist - dies gilt für alle Erfindungsalternativen - die aus dem Stand der Technik bekannte "starre" Bindung der Halterungen an nur einen Kreisbahnträger aufgehoben. Erfindungsgemäß ist jede Halterung an einem separaten Trägerring angeordnet, d. h., es sind wenigstens fünf, vorzugsweise sechs separate Halterung-Trägerring-Paare vorgesehen. Jeder Trägerring wird mitsamt der Halterung bewegt, d. h., dass die Halterung fest an ihm angeordnet ist. Der Trägerring dreht um seinen Mittelpunkt. Zur Ermöglichung dieser Drehbewegung ist jeweils ein elektromotorisches Antriebsmittel umfassend einen magnetfeldgetriebenen Rotor sowie einen Stator vorgesehen. Der Trägerring selbst bildet hierbei erfindungsgemäß den Rotor oder einen Teil des Rotors, er wird also relativ zu dem lagefesten, ebenfalls ringförmigen Stator, der ihm zugeordnet ist, gedreht. Die Rotor-Stator-Anordnung weist also keine mechanische Antriebsverbindung zwischen den Antriebsmittelbauteilen, nämlich Rotor und Stator, auf, anders als im Stand der Technik, wo üblicherweise ein antreibender Elektromotor vorgesehen ist, der über ein Zahnrad an einer entsprechenden Verzahnung eingreift, wie einleitend beschrieben. Vielmehr erfolgt der Antrieb über ein zwischen Stator und Rotor aufgebautes, längs des Stators wanderndes Magnetfeld, das lokal mit dem Rotor, also dem Trägerring zusammenwirkt und diesen treibt.

Die erfindungsgemäß vorgesehene "Entkopplung" der Halterungen durch Zuordnung respektive Anordnung an jeweils einem halterungsspezifischen separaten Trägerring sowie die Auslegung des Antriebsmittels als Rotor-Stator-Antrieb, der es ermöglicht, den Trägerring als reines rotierendes Bauteil ohne zugeführte Versorgungsleitungen und Ähnliches auszulegen, ermöglicht mit besonderem Vorteil beliebig häufige 360°-Drehungen der einzelnen Trägerringe ohne der Gefahr einer Kabelaufwicklung, und damit die Abarbeitung auch komplexer Stellaufgaben, die mehrfache 360°-Drehungen erfordern.

Hinsichtlich der räumlichen Anordnung der Trägerringe und der jeweils zugeordneten Statoren sind unterschiedliche Ausgestaltungen denkbar. Eine bevorzugte Erfindungsalternative sieht vor, die Trägerringe konzentrisch übereinander anzuordnen, d. h., dass sie in parallelen Horizontalebenen übereinander positioniert werden, wobei sie dann um eine gemeinsame zentrale Drehachse gedreht werden. Entsprechenderweise sind natürlich auch die den jeweiligen Trägerringen zugeordneten Statoren konzentrisch übereinander angeordnet. Bei dieser Ausgestaltung weisen die Trägerringe alle den gleichen Durchmesser auf, gleiches gilt für die zugeordneten Statoren. Denkbar ist es auch, alle Trägerringe konzentrisch ineinander liegend anzuordnen, d. h., dass die Ringdurchmesser von Ring zu Ring abnehmen. Grundsätzlich besteht die Möglichkeit, in entsprechender Weise auch die zugeordneten Statoren in derselben Horizontalebene anzuordnen und folglich auch zusammen mit den jeweiligen Trägerringen ineinanderliegend zu positionieren. Gleichermaßen ist es aber auch denkbar, die Trägerringe mit entsprechenden in Richtung der Drehachse verlängerten Ansätzen zu versehen, an denen entsprechende, mit den unterhalb der Trägerringebene positionierten Statoren zusammenwirkende Ringabschnitte vorgesehen sind bzw. die solche Ringabschnitte bilden. Dies ermöglicht es, die Trägerringe relativ kompakt ineinanderliegend zu positionieren und nicht zusätzlich die Statoren zwischenordnen zu müssen, diese sind in den Bereich unterhalb der Trägerringebene verlagert. Die einzelnen ringspezifischen axial verlaufenden Ansätze können unterschiedlich lang sein, so dass die einzelnen Statoren in unterschiedlichen Ebenen angeordnet werden können. Die Ringe sind jedoch grundsätzlich auch hier um eine gemeinsame Drehachse drehbar. Denkbar ist auch eine Kombination beider Anordnungsalternativen derart, dass die Ringe oder Ringabschnitte vertikal und radial versetzt zueinander angeordnet sind, so dass sich beispielsweise eine von oben nach unten gestufte Anordnung ergibt. Bei dieser Erfindungsausgestaltung nehmen also die Ringdurchmesser und die Durchmesser der einzelnen zugeordneten Statoren schrittweise ab, die jeweiligen Rotor-Stator-Paare sind in vertikal versetzten Ebenen positioniert.

Alternativ zu diesen quasi kompakten Anordnungen ist es jedoch auch denkbar, die einzelnen Trägerringe nebst ihren Statoren in unterschiedlichen und zueinander verkippten Ebenen anzuordnen. Letztlich kann die räumliche Positionierung der Rotor-Stator-Paare nahezu beliebig gewählt werden, solange eine Trägerringrotation und daraus resultierend die Verstellung der Aufnahme möglich ist.

Hinsichtlich der räumlichen Anordnung des Rotors zum Stator sind grundsätzlich zwei unterschiedliche Bauformen denkbar, nämlich zum einen die Ausführung als Innenläufer, bei der der jeweilige Rotor innerhalb des ihm zugeordneten Stators angeordnet ist, oder die Ausführung als Außenläufer, bei der der Stator innerhalb des ihm zugeordneten Rotors angeordnet ist. Beim erfindungsgemäßen Hexapod sind beide Ausführungsformen realisierbar, auch unabhängig davon, wie nun die konkrete räumliche Positionierung der einzelnen Rotor-Stator-Antriebe zueinander ist (konzentrisch übereinander, versetzt etc.).

Der Rotor ist, da ein drehbares Bauteil, in geeigneter Weise zu lagern, damit er möglichst reibungsarm rotieren kann. Zu diesem Zweck können die Trägerringe über Lagemittel an einem oder mehreren feststehenden Bauteilen gelagert sein. Ein solches festes Lagerbauteil kann beispielsweise auch der jeweilige Stator selbst sein, der beispielsweise jeweils einen z. B. mit einem radial nach innen oder außen ragenden Ringflansch gebildeten Lagerabschnitt aufweist, auf dem der Rotor über ein geeignetes Lagermittel drehgelagert ist. Denkbar ist es aber auch, bei konzentrischer Anordnung der Trägerringe vertikal übereinander die Ringe über zwischen ihnen angeordnete Lagermittel zu lagern. Zwischen den einzelnen Rotoren sind folglich geeignete Lagermittel wie beispielsweise Kugellager und Ähnliches positioniert, so dass die Rotoren direkt aufeinander abwälzen. Dabei kann das verwendete Lagermittel, beispielsweise das beschriebene Kugellager, ein "komplettes" Kugellager bestehend aus zwei axialen Lagerringen mit dazwischen befindlichen Kugel sein, wobei die jeweiligen Lagerringe mit dem einen und dem anderen Rotor verbunden sind. Denkbar ist es aber auch, den jeweiligen Rotor selbst als Teil des Lagers zu nutzen, an ihm also beispielsweise eine Kugelrille auszuführen, so dass lediglich noch die Kugeln zwischen die beiden die Lagerringe bildenden Rotoren zu setzen sind. Wie auch der Stator mit seinem oben beschriebenen Lagerabschnitt, an dem ebenfalls eine Kugelrille ausgeführt sein kann, kann also auch der Rotor Teil des Lagermittels selbst sein. An dieser Stelle ist festzuhalten, dass neben dem beschriebenen Kugellager selbstverständlich auch jedwede andere Lagerart, beispielsweise Rollenlager, Nagellager, Gleitlager und Ähnliches bis hin zu Luftlagern eingesetzt werden können.

Alternativ zu der beschriebenen, quasi "inneren" Lagerung der Rotoren ist es auch denkbar, die Trägerringe jeweils mit einem Lagerarm zu versehen, wobei alle Lagerarme über Lagermittel an einer gemeinsamen zentralen Lagerstütze gelagert sind. Diese Ausgestaltung ist nur bei einer Ausführung des Antriebsmittels als Innenläufer möglich. Vorgesehen ist hierzu eine mittige Lagerstütze, die sich beispielsweise von einer Bodenplatte des Hexapods bei beispielsweise konzentrischer Ringanordnung durch die einzelnen Ringe erstreckt. An ihr sind entsprechende Lagerabschnitte vorgesehen, an denen die einzelnen Lagerarme über geeignete Lagermittel (Wälzlager, Gleitlager etc.) drehgelagert sind.

Die beschriebenen Lagerungsarten sind natürlich nicht abschließend. Selbstverständlich sind unterschiedlichste Lagerungsausführungen denkbar, die unter anderem auch davon abhängen, ob das jeweilige Antriebsmittel als Innen- oder Außenläufer konzipiert ist. Denkbar wäre es beispielsweise auch, im Falle eines Außenläufers ein entsprechendes Gehäuse vorzusehen, an dem die außenliegenden Rotoren drehgelagert sind, im Falle eines Innenläufertyps wäre ein Innengehäuse als Lagerort denkbar und Ähnliches.

Neben der vorstehend beschriebenen Erfindungsausgestaltung mit Trägerringen und Statorringen, wobei jedem geschlossenen Trägerring ein eigener Statorring zugeordnet ist, sieht eine zweite grundlegende Erfindungsalternative bei einem Hexapod der eingangs genannten Art vor, dass jede Halterung an einem separaten Trägerringsegment angeordnet ist, wobei das jeweilige Trägerringsegment samt der an ihm angeordneten Halterung bewegbar ist, und dass jedes Trägerringsegment den Rotor oder einen Teil eines Rotors eines elektromotorischen Antriebsmittels umfassend weiterhin mindestens einen den Trägerringsegmenten zugeordneten ringförmigen Stator bildet, wobei am Stator eine Vielzahl separat bestrombarer Spulen zur Erzeugung eines mit dem Rotor wechselwirkenden Magnetfelds vorgesehen ist.

Nach dieser Alternative ist eine Halterung nicht an einem geschlossenen Trägerring angeordnet, sondern an einem nur um ein bestimmtes Winkelstück - das auch sehr klein bemessen sein kann, also nur wenige Grad betragen kann - umlaufenden Ringsegment angeordnet. Das Ringsegment bildet den Rotor des elektromotorischen Antriebs zusammen mit dem Stator, zwischen beiden wirkt auch hier ein statorseitig erzeugtes und für eine Rotorbewegung entlang des Stator wanderndes Magnetfeld, das beide antriebskoppelt. Der Rotor ist hier also auf einen Segementteilbereich reduziert, die Bildung eines geschlossenen Rings nicht erforderlich. Dabei kann grundsätzlich jedem Trägerringsegment auch hier ein eigener ringförmiger Stator zugeordnet sein, d.h. dass jedes Segment seine eigene Bahn hat. Nach einer besonders zweckmäßigen Ausgestaltung ist jedoch mehreren Trägerringsegmenten ein gemeinsamer Statorring zugeordnet, d.h. dass z.B. zwei Trägerringsegmente an einem gemeinsamen Stator geführt sind. Sie können durch geeignete Ansteuerung der magnetfelderzeugenden statorseitigen Elemente separat bewegt werden, d.h. dass statorseitig separate lokale Magnetfelder erzeugt werden. Mehrere Rotoren (oft auch Läufer genannt) werden durch die geeignete Ansteuerung zur Magnetfelderzeugung auf einem gemeinsamen Statorring logisch angesteuert. Z.B. können zwei Trägerringsegmente an einem gemeinsamen Statorring geführt sein, so dass bei sechs Segmenten drei Statorringe vorgesehen sind. Auch können an einem Statorring drei Segmente geführt werden, so dass nur zwei Statorringe benötigt werden. Nach einer besonders zweckmäßigen und kleinstbauenden Ausführung sind alle fünf oder sechs Trägerringsegmente an einem gemeinsamen Stator geführt. Hier ist nur ein einziger Statorring vorgesehen, auf dem bis zu sechs gemeinsame Bahnen liegen, die regelungstechnisch, also was die Erzeugung der treibenden Magnetfelder angehet, voneinander getrennt sind. Sie stellen somit wieder sechs virtuell voneinander getrennte Ringbahnen mit unabhängig voneinander positionierbaren Trägerringsegmenten dar.

Auch diese Erfindungsalternative bietet die bereits zur ersten Erfindungsalternative beschriebenen Vorteile gegenüber dem Stand der Technik, sie lässt insbesondere beliebig häufige 360°-Drehungen zu, da auch hier infolge der mechanischen Entkopplung von Rotor und Stator durch Realisierung des elektromotorischen Antriebs keine Leitungen etc. die Drehung behindern.

Besonders vorteilhaft wird diese Erfindungsalternative dadurch weitergebildet, dass jedes Trägerringsegment - vertikal gesehen - oberhalb des Stators über ein zwischen Rotor und Stator wirkendes Magnetfeld schwebt. Wie beschrieben ist das Antriebsprinzip das eines Elektromotors, also ein magnetfeldbasierendes Antriebskonzept. Wird nun der jeweilige Rotor oberhalb des Stators positioniert, so kann durch entsprechende Regelung des zwischen Rotor und Stator wirkenden Magnetfelds, das wie nachfolgend noch beschrieben wird über statorseitige Felderzeugungsmittel, also Spulen erzeugt wird, erreicht werden, dass der jeweilige Rotor in einem definierten Abstand oberhalb des Stators schwebt. Kommt beispielsweise nur ein gemeinsamer Statorring zum Einsatz, so schweben auf ihm alle fünf oder sechs Trägerringsegments nebst Halterungen. Sie werden über die geregelten Magnetfelder in definiertem Abstand zum Stator gehalten. Der Stator - unabhängig davon, ob nur ein Stator oder ob mehrere Statoren vorgesehen sind - besitzt eine Vielzahl einzeln ansteuerbarer elektrische Spulen, sie separat bestrombar sind. Der Rotor, worauf nachfolgend noch eingegangen wird, weist Permanentmagnete auf oder wird allein durch die geregelte Bestromung der Spulen auf Distanz gehalten (Reluktanz mit Weicheisenkern). Wandert nun das Statorfeld längs der Statorbahn, schleppt es den Rotor, also das Trägerringsegment nebst Halterung mit, dieser wandert also mit dem Erregerfeld. Es handelt sich hierbei also um das Funktionsprinzip eines Linearmotors (Drehfeldlinearmotor), der hier erfindungsgemäß eine geschlossene Kreisbahn bildet. Die Trägerringsegmente werden alle über die wechselwirkenden Magnetfelder am Stator gehalten und geführt. Irgendwelche Lagerelemente sind hier nicht erforderlich.

Das dem Antriebsmittel zugrunde liegende elektromotorische Antriebsprinzip kann ein beliebiges Antriebsprinzip sein, solange es eine Rotor-Stator-Anordnung nutzt. Dies gilt für alle beschriebenen Ausgestaltungen und Alternativen der Erfindung. Rotor und Stator bilden zusammen also einen Elektromotor, wobei grundsätzlich nahezu jede Art von elektromotorischem Antriebstyp realisiert sein kann, der sich in die hexapodspezifische Rotor-Stator-Anordnung integrieren respektive mit diesen ausbilden lässt. Denkbar ist beispielsweise die Ausgestaltung des elektromotorischen Antriebs als Schrittmotor, als elektronisch kommutierter AC-oder DC-Servomotor, als Glockenankermotor, als bürstenbehafteter DC-Motor, als Scheibenläufermotor, als Spaltmotor oder als Linearmotor. Dabei sind selbstverständlich sämtliche zu bestromende Bauteile, die also eine Kabelverbindung benötigen, am Stator vorgesehen. Am Rotor befinden sich lediglich die erforderlichen Bauteile, die keiner Versorgung bedürfen, so dass dorthin keine Kabel zu führen sind. Der Stator besteht respektive umfasst folglich eine Vielzahl separat bestrombarer Spulen zur Erzeugung eines mit dem Rotor wechselwirkenden Magnetfelds, d. h., dass der Stator fremderregt ist, was für eine exakte Steuerung der Ringpositionierung vorteilhaft ist. Am Trägerring oder Trägerringsegment selbst sind eine Vielzahl an in z.B. kreisförmiger Konfiguration angeordneter, mit dem statorseitig erzeugten Magnetfeld wechselwirkender Magnetelemente vorgesehen. Bei Einsatz geschlossener Trägerringe ist es jedoch nicht erforderlich, die Magnetelemente über den gesamten Umfang des Trägerrings zu verteilen, vielmehr ist es für eine antreibende Wechselwirkung mit einem statorseitig nur lokal erzeugten Magnetfeld auch dem Magnetelemente nur lokal vorzusehen. Denkbar ist es, dass Erfassungsmittel vorgesehen sind, die ein Erkenne, wo die rotorseitig vorgesehenen Magnetelements lokal gerade liegen, ermöglichen, so dass seitens der Steuerungseinrichtung auch nur die Spulen angesteuert werden können, die für ein Wechselwirken mit den rotorseitigen Magnetelementen momentan ein Magnetfeld erzeugen müssen. Alternativ ist es auch möglich, den Trägerring oder das Trägerringsegment selbst insgesamt aus diesen Magnetelementen zu bilden. Verwendet werden können als Magnetelemente Bleche oder Permanentmagnete und Ähnliches. Grundsätzlich ist festzuhalten, dass die Ausbildung und Auslegung der Spulen sowie die Ausbildung und Auslegung der Magnetelemente beliebig ist und jeweils entsprechend den Notwendigkeiten der realisierten elektromotorischen Antriebsart, also der realisierten Motorenart (siehe obige nicht abschließende Aufzählung) gewählt wird.

Die umfangsmäßige Auflösung, d. h., die Anzahl der statorseitig vorgesehenen Spulen sowie der rotorseitig vorgesehenen Magnetelemente ist letztlich beliebig und je nach Anforderung respektive Einsatzzweck des Hexapods auszulegen. Wird beispielsweise ein Stator als 64-poliger Schrittmotor-Stator aufgebaut, der 64 separat bestrombare Spulen aufweist, so kann über eine geeignete Steuerung mit 128-tel Schritten der Umfang in insgesamt 16.384 Schritte unterteilt werden, d. h., dass 16.384 definierte Ringpositionen angefahren werden können. Dieses eine Beispiel zeigt bereits die hochgenaue Positionierungsmöglichkeit der einzelnen Trägerringe oder Trägerringsegmente und daraus resultierend die hochgenaue Einstellbarkeit einer gewünschten Raumposition der Aufnahme.

Wie beschrieben sind am Stator die bestrombaren Spulen vorgesehen. Der Stator besteht hierzu beispielsweise aus einem Basisring, an dem radial nach innen oder radial nach außen (je nach Ausführungsform als Innenläufer oder Außenläufer, worauf nachfolgend noch eingegangen wird) entsprechende die Spulenkerne bildende Spulenträger hervorstehen, um die die Spulen gewickelt sind. Die Anordnung und Auslegung der Spulenträger respektive der Spulen selbst und deren Wicklung ist selbstverständlich motorspezifisch zu wählen. Bei einer Ausgestaltung als Linearmotor sind die Spulen in radialer Richtung um den Stator gewickelt, vorspringende Spulenträger sind hier nicht erforderlich. Benachbart zu den Spulen liegt je nach Ausgestaltung das Trägerringsegment oder der Trägerring respektive der Ringteil, an dem die mit den Spulen respektive dem hierüber erzeugten Magnetfeld wechselwirkenden Magnetelemente vorgesehen sind. Der Trägerring oder das Trägerringsegment kann insgesamt aus diesen Magnetelementen gefertigt sein, bei Verwendung geeigneter Magnetbleche ist der Ring oder das Segment also letztlich ein zusammengesetztes Blechbauteil. Denkbar ist es aber natürlich auch, an dem Trägerring bzw. dem Ringsegment separate Magnetelemente, also entsprechende Bleche oder Permanentmagnete anzuordnen. Die Ausgestaltung ist auch hier beliebig und ergibt sich aus der gewählten Antriebsart respektive der gewünschten Hexapodbauform respektive auch unter Berücksichtigung des Einsatzgebiets.

Um die exakte Position des Trägerrings bzw. des Trägerringsegments relativ zum Stator zu erfassen ist jedem Trägerring bzw. Trägerringsegment in Weiterbildung der Erfindung wenigstens ein Positionssensor zur Erfassung der Position des Rotors relativ zum Stator zugeordnet. Über diesen Positionssensor, der eine möglichst hohe Auflösung haben sollte, kann sehr exakt die Ring- oder Segmentposition bestimmt werden, was für eine exakte Steuerung der einzelnen Trägerringe oder Ringsegmente im Hinblick auf die anzusteuernde Aufnahmenposition erforderlich ist. Die Konfiguration ist dabei selbstverständlich derart, dass auch hier keine rotorseitig zugeführten Kabel oder Ähnliches vorgesehen sind, um den Positionssensor zu betreiben, vielmehr befindet sich dieser statorseitig und wechselwirkt mit dem Rotor.

Bevorzugt kommen beispielsweise statorseitig angeordnete Hall-Sensoren als Positionssensoren zum Einsatz, die mit am jeweiligen Trägerring oder Trägerringsegment befindlichen signalgebenden Elementen zusammenwirken. Ein Hall-Sensor nutzt den Hall-Effekt zur Messung von Magnetfeldern. Wird ein Hall-Sensor von einem Strom durchflossen und in ein dazu senkrecht verlaufendes Magnetfeld gebracht, so liefert er eine von der magnetischen Feldstärke abhängige Ausgangsspannung, diese stellt also eine Größe für das einwirkende Magnetfeld dar. Werden nun am Trägerring oder am Trägerringsegment entsprechende signalgebende Elemente angeordnet, über die eine Feldwechselwirkung mit den Hall-Sensoren möglich ist, so kann hieraus auf einfache Weise die Position erfasst werden. Besonders zweckmäßig ist es, wenn die signalgebenden Elemente die trägerring- oder segmentseitig vorgesehenen Magnetelemente selbst sind, d. h., dass die Positionssensoren unmittelbar mit den Magnetelementen des Trägerrings bzw. des Trägerringsegments zusammenwirken und hierüber die Positionserfassung erfolgt, so dass keine zusätzlichen signalgebenden Elemente anzuordnen sind.

Schließlich ist gemäß einer Weiterbildung der Erfindung vorgesehen, eine gemeinsame, die einzelnen Antriebsmittel steuernde Steuerungseinrichtung zu verwenden, über die die einzelnen Antriebsmittel separat gesteuert werden, d. h., dass jedwede einzelnen Spule respektive deren Bestromung über die Steuerungseinrichtung separat angesteuert wird, so, wie es die gewünschte Ring-oder Segmentbewegung zur Durchführung der Stellaufgabe erfordert, um das hierfür erforderliche Magnetfeld aufzubauen.

Abschließend ist festzuhalten, dass, wenngleich vorstehend ein elektromotorisches Antriebsprinzip beschrieben wurde, auch andere Antriebsprinzipien verwendet werden können, die einen Rotor und einen Stator nutzen. Denkbar wäre auch die Realisierung eines druckluftgetriebenen, eines thermodynamischen oder eines hydrostatischen Antriebsprinzips, wobei der Rotor und der Stator je nach zu realisierendem Antriebsprinzip entsprechend auszugestalten sind.

Grundsätzlich gilt, dass das realisierte Antriebsprinzip, insbesondere das elektromotorische Antriebsprinzip, hochdynamisch ist, da große Drehmomente bei gleichzeitig hohen Drehgeschwindigkeiten erzeugt werden können. Separate Getriebe und Ähnliches entfallen. D. h., dass sich der erfindungsgemäße Hexapod insbesondere für dynamische Anwendungen eignet, wobei das Anwendungsfeld letztlich beliebig ist. Denn der erfindungsgemäße Hexapod kann überall dort eingesetzt werden, wo eine räumliche Bewegung eines Gegenstands respektive eine exakte räumliche Positionierung eines Gegenstands, der an der Aufnahme angeordnet ist oder mit dieser verbunden ist, gefordert wird. Die über die Aufnahme bewegbaren und positionierbaren Gerätschaften können beliebigster Natur sein. Denkbar sind kleine und kleinste Gerätschaften wie beispielsweise in der Medizintechnik zu verwendende Operations- oder Arbeitsmittel, die an der Aufnahme angeordnet sind und durch verstellen der Aufnahme im Raum ebenfalls beliebig relativ zu einem zu behandelnden Objekt bewegt werden könne. Ein Einsatz ist auch bei in der Bearbeitungstechnik zu verwendenden Werkzeugen oder Werkstückhaltern denkbar, hier befindet sich das Werkzeug oder der das zu bearbeitenden Werkstück aufnehmende Halter an der Aufnahme. Das Werkzeug, z.B. ein Fräser o.dgl., wird über den Hexapod gedreht und relativ zum Werkstück bewegt, bzw. wird über den Hexapod das am Halter befindliche Werkstück relativ zum z.B. lagefesten oder ebenfalls über einen Hexapod oder einen anderen Manipulator bewegbaren Werkzeug bewegt. Auch große Strukturen wie Teleskope oder Satellitenschüsseln oder Simulatoren wie Flugsimulatoren, Hubschraubersimulatoren oder Kraftfahrzeugsimulatoren können mit einem erfindungsgemäßen Hexapod ausgerüstet werden. Z.B. kann ein Teleskop oder z.B. einzelne Linsen oder andere Bauteile über den Hexapod hochgenau und beliebig im Raum positioniert werden. Eine Satellitenschüssel, die letztlich beliebig groß sein kann, kann über den Hexapod genauestens bezüglich eines Fixpunkts ausgerichtet werden. Bei Einsatz in Simulatoren sind hochdynamische Stellbewegungen bis hin zu Crashsimulationen unter Verwendung des erfindungsgemäßen Hexapods denkbar. Denkbar ist z. B. auch der Einsatz bei einem Röntgengerät, insbesondere bei einem Computertomographiegerät. An der ringförmigen Aufnahme, deren Größe so bemessen ist, dass ein Objekt durch sie hindurchbewegt werden kann, kann eine Strahlungsquelle und ein Strahlungsempfänger einander gegenüberliegend angeordnet werden. Das Objekt wird nun durch die Aufnahme hindurchbewegt, da auch der Hexapod selbst ein ringförmiges, offenes Bauteil ist, kann das Objekt zwangsläufig auch durch diesen bewegt werden. Dies ermöglicht es folglich, die bildgebende Einheit (Strahlungsquelle und Strahlungsempfänger) längs des Objekts zu bewegen und natürlich auch mit hoher Geschwindigkeit durch Drehung der Trägerringe um den Patienten zu drehen. Die Verstellbarkeit der Raumlage der Aufnahme lässt folglich auch ein beliebiges Verkippen der Bildaufnahmeebene relativ zum Patienten zu, so dass die Bildaufnahmeebene selbst während der Untersuchung beliebig gewählt und eingestellt werden kann und Aufnahmen aus unterschiedlichen Richtungen und Drehwinkeln aufgenommen werden können. Der Einsatz ist jedoch nicht nur auf den Bereich der Röntgenbildgebung, sondern grundsätzlich bei allen bildgebenden Untersuchungsverfahren denkbar, wie auch für etwaige Strahlungstherapien und Ähnliches.

Weitere Vorteile, Merkmale und Einzelheiten der Erfindung ergeben sich aus den im Folgenden beschriebenen Ausführungsbeispielen sowie anhand der Zeichnung. Dabei zeigen:
- Fig.1: eine Prinzipdarstellung eines erfindungsgemäßen Hexapods einer ersten Ausführungsform im Schnitt,
- Fig. 2: eine Aufsicht auf eine Trägerring-Stator-Anordnung des Hexapods aus Fig. 1,
- Fig. 3: eine Prinzipdarstellung eines erfindungsgemäßen Hexapods einer zweiten Ausführungsform im Schnitt,
- Fig. 4: eine Aufsicht auf eine Trägerring-Stator-Anordnung des Hexapods aus Fig. 3,

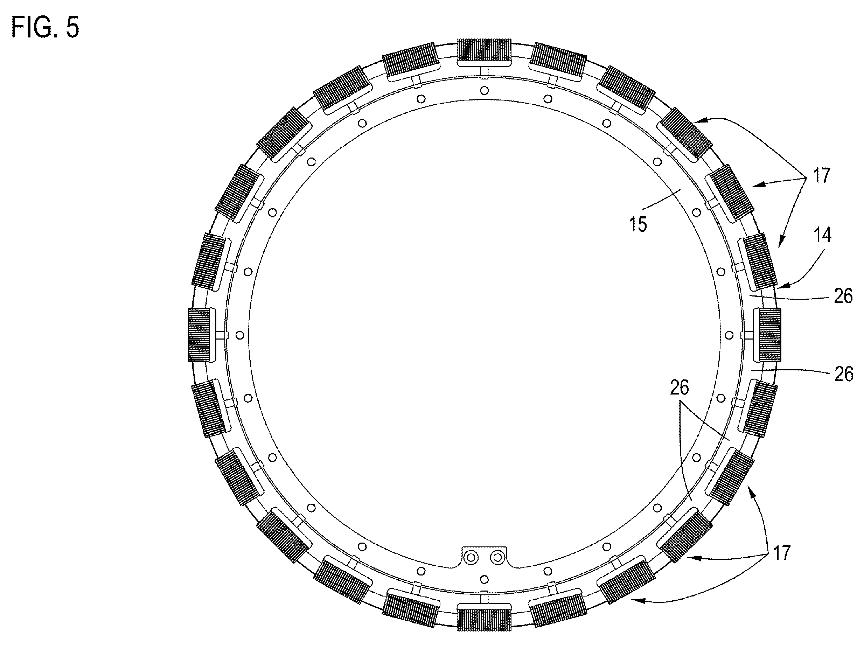

- Fig. 5: eine Aufsicht auf eine weitere Ausführungsform einer Trägerring-Stator-Anordnung,
- Fig. 6: eine Teilansicht einer weiteren Lagermöglichkeit der Trägerringe,
- Fig. 7: eine Perspektivansicht eines Hexapods einer dritten Ausführungsform von oben
- Fig. 8: eine Perspektivansicht des Hexapods aus Fig. 7 von unten,
- Fig. 9: eine vergrößerte Teilansicht des Hexapods gemäß Ansicht aus Fig. 7,

- Fig. 10: eine vergrößerte Teilansicht des Hexapods gemäß Ansicht aus Fig. 9,
- Fig. 11: eine weitere Ausführungsform eines Hexapods ähnlich dem aus den Fig. 7 - 10, jedoch mit jeweils einem Trägerringsegment pro Stator,
- Fig. 12: eine Prinzipdarstellung einer ersten Einsatzmöglichkeit des erfindungsgemäßen Hexapods,
- Fig. 13: eine Prinzipdarstellung einer zweiten Einsatzmöglichkeit des erfindungsgemäßen Hexapods,
- Fig. 14: eine Prinzipdarstellung einer dritten Einsatzmöglichkeit des erfindungsgemäßen Hexapods,
- Fig. 15: eine Prinzipdarstellung einer vierten Einsatzmöglichkeit des erfindungsgemäßen Hexapods,
- Fig. 16: eine Prinzipdarstellung einer fünften Einsatzmöglichkeit des erfindungsgemäßen Hexapods, und
- Fig. 17: eine Prinzipdarstellung einer sechsten Einsatzmöglichkeit des erfindungsgemäßen Hexapods

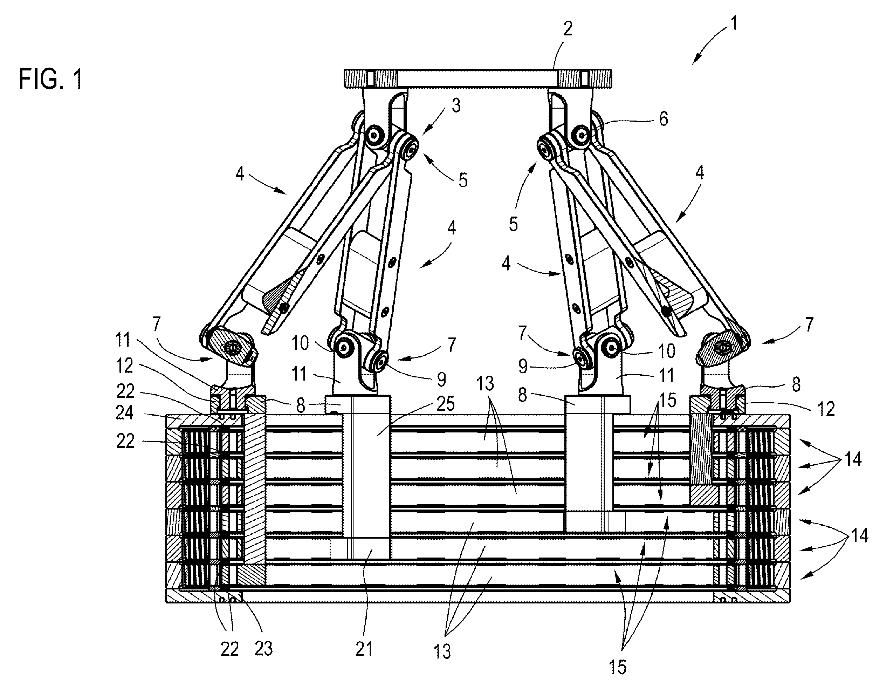

Fig. 1 zeigt einen erfindungsgemäßen Hexapod 1, umfassend eine beispielsweise platten- oder ringförmige Aufnahme 2, an der ein hier nicht näher gezeigter, jedoch über den Hexapod 1 im Raum zu bewegender Gegenstand anzuordnen ist. An der Aufnahme 2 sind in Gelenken 3 beweglich gelagerte Stäbe 4 angeordnet, wobei insgesamt sechs Stäbe vorgesehen sind, in der Schnittansicht gemäß Fig. 1 jedoch nur vier gezeigt sind. Die Stäbe sind jeweils in einem ersten Drehgelenk 5 um eine Achse drehgelagert, wobei das Drehgelenk 5 seinerseits um eine Drehachse 6 an einem entsprechenden Fortsatz der Aufnahme 2 drehgelagert ist. Es ergibt sich also eine kardanartige Gelenklagerung der einzelnen Stäbe 4.

Mit ihrem anderen Ende sind die Stäbe 4 über ein weiteres Gelenk 7 an jeweils einer Halterung 8 angeordnet. Das Gelenk 7 umfasst wiederum ein Drehgelenk 9, das seinerseits um eine weitere Drehachse 10 an einer ihrerseits an der Halterung 8 drehbar aufgenommenen Gelenkhalterung 11 drehgelagert ist. Auch hier ist also eine kardanische Bewegungslagerung realisiert, mit einer zusätzlichen Verdrehmöglichkeit um die Drehlagerung 12 der Gelenkhalterung 11. Insgesamt resultiert aus der beschriebenen Lagerung eine hochgradige Beweglichkeit der Aufnahme 2, die folglich in extrem vielen Raumpositionen positioniert werden kann, indem die Relativposition der einzelnen Halterungen 8 zueinander verändert werden, worauf nachfolgend noch eingegangen wird.

Der Hexapod 1 umfasst ferner insgesamt sechs Trägerringe 13. An jedem Trägerring 13 ist jeweils eine Halterung 8 befestigt, wozu die Halterung 8 einen quasi axial verlaufenden Abschnitt 25 aufweist, der in einen Befestigungsabschnitt 21 übergeht, über den die Halterung 8 am jeweiligen Trägerring 13 befestigt ist. Ersichtlich sind die Trägerringe 13 konzentrisch übereinander angeordnet, alle weisen den gleichen Durchmesser auf, sie sind alle um eine gemeinsame Zentralachse drehbar.

Die einzelnen Trägerringe 13 bilden jeweils den Rotor eines Antriebsmittels, das neben dem Trägerring 13, also dem Rotor, auch jeweils einen Stator 14 umfasst, wobei jedem Trägerring jeweils ein Stator 14 zugeordnet ist. Die Statoren umlaufen die Rotoren 15 außenseitig, d. h., dass der jeweilige Rotor 15 ein Innenläufer ist, mithin also das aus jeweils einem Rotor 15 und einem Stator gebildete Antriebsmittel ein Innenläuferantrieb ist.

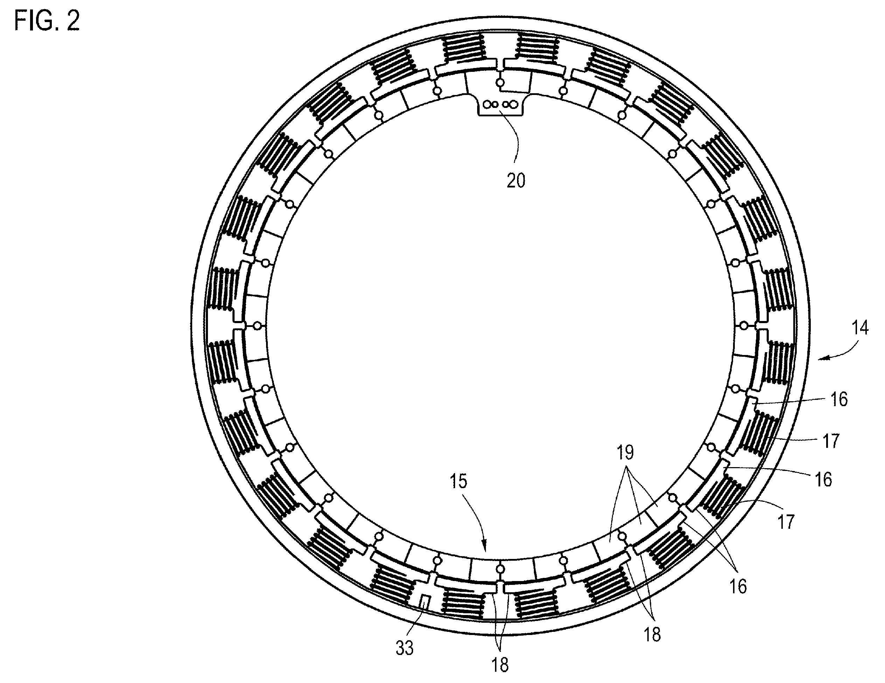

Das Antriebsmittel ist ein elektromotorisches Antriebsmittel, am Stator 14, siehe auch Fig. 2, sind radial nach innen ragende Spulenträger 16 vorgesehen sind, die jeweils eine Spule 17 tragen, d. h., die Spule 17 ist auf die Spulenträger 16 gewickelt. Die Spulenträger 16 weisen an ihrer Innenseite verbreitete Abschnitte 18 auf, denen gegenüber der Rotor 15 liegt. Bei der hier beschriebenen Ausgestaltung bildet der jeweilige Trägerring 13 gleichzeitig den Rotor 15. Hierzu besteht der Trägerring aus einer Vielzahl einzelner Magnetelemente 19, beispielsweise geeigneter Blechpakete oder Ähnlichem, die, siehe Fig. 2, zu einer Ringform montiert sind. An diesem Rotor 15 an einem Befestigungsabschnitt 20 die Halterung 8 über ihren Befestigungsabschnitt 21 fixiert.

Wie Fig. 1 zu entnehmen ist, liegen die Rotoren 15 und Statoren 14 vertikal gesehen übereinander. Während die Statoren 14 lagefest sind, drehen die Rotoren 15 im Betrieb, worauf nachfolgen noch eingegangen wird. Um diese Drehbewegung zu ermöglichen sind Lagermittel 22 vorgesehen, die bei dem gezeigten Ausführungsbeispiel axial wirken. Die Lagermittel 22 befinden sich, vertikal gesehen, zwischen den jeweiligen Rotoren 15 respektive zwischen dem untersten Rotor 15 und der Bodenplatte 23 bzw. dem obersten Rotor 15 und der Deckelplatte 24. Diese Lagermittel 12 sind beispielsweise einfache Kugeln, die in entsprechende, hier nicht näher gezeigte Kugelrillen, die an den einzelnen Ober-und Unterseiten der Rotoren 15 respektive der Bodenplatte 23 und der Deckelplatte 24 ausgebildet sind, geführt sind. Diese Kugelrillen bilden die Wälzflächen für die Kugeln, so dass keine separaten Laufringe vorzusehen sind. Selbstverständlich könnten aber auch vollständige Axiallager eingesetzt werden. In jedem Fall ist jeder Trägerring 13 und damit jeder Rotor 15 separat verdrehbar.

Die Bewegung der einzelnen Trägerringe 15 und daraus resultierend die Bewegung der einzelnen Halterungen und daraus wiederum resultierend die Bewegung und räumliche Verstellung der einzelnen Stäbe 4 erfolgt durch den Aufbau entsprechender Magnetfelder über den Stator 14 und die Wechselwirkung der Magnetfelder mit dem Rotor 15 respektive den dortigen Magnetelementen 19. Über eine nicht näher gezeigte Steuerungseinrichtung ist es möglich, jede einzelne Spule 17 jedes Stators 14 separat ansteuern, also bestromen zu können. Durch Bestromung einer Spule 17 wird ein Magnetfeld aufgebaut, das mit den Magnetelementen 19 des Stators 14 zusammenwirkt. Dieses Magnetfeld kann durch geeignete Spulenansteuerung umfangsmäßig wandern, so dass der Rotor 15 über dieses Wanderfeld bewegt wird. Je nach Ansteuerung der Spulen 17 kann ein einzelner Trägerring 13 gedreht werden, oder mehrere Trägerringe 13 oder alle Trägerringe simultan. Dies ermöglicht es, im Rahmen der umfangsmäßigen Bewegungsfreiheit der einzelnen Halterungen 8 die Trägerringe 13 beliebig zueinander zu verstellen. Hieraus resultiert eine Änderung der Winkelstellung der einzelnen Stäbe 4 relativ zueinander, was sich wiederum in einer entsprechenden Änderung der Raumposition der Aufnahme 2 äußert.

Vorgesehen ist ferner ein am Stator 14 angeordneter Positionssensor 33, beispielsweise ein Hall-Sensor, der der Erfassung der exakten Position des Rotors 15 dient (siehe Fig. 2). Dieser wechselwirkt mit den Magnetelementen 19, ist also in der Lage, die Bewegung der einzelnen, an ihm vorbeidrehenden Magnetelemente 19 zu erfassen. Er kommuniziert mit der nicht gezeigten Steuerungseinrichtung, die den gesamten Hexapodbetrieb steuert und die aus dem Sensorsignal die entsprechende Ist-Position des jeweiligen Trägerrings 13 zum Stator 14 erfasst.

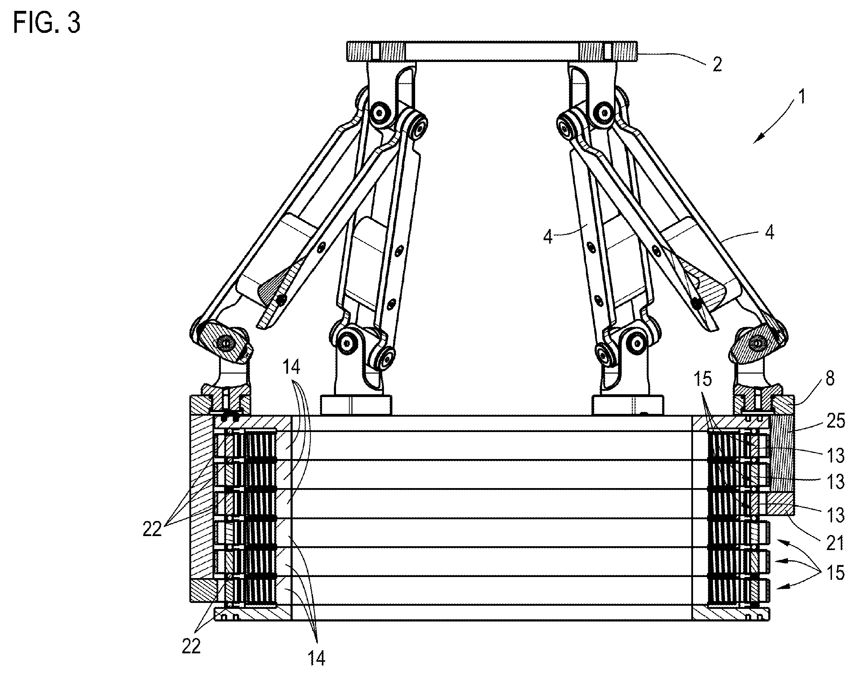

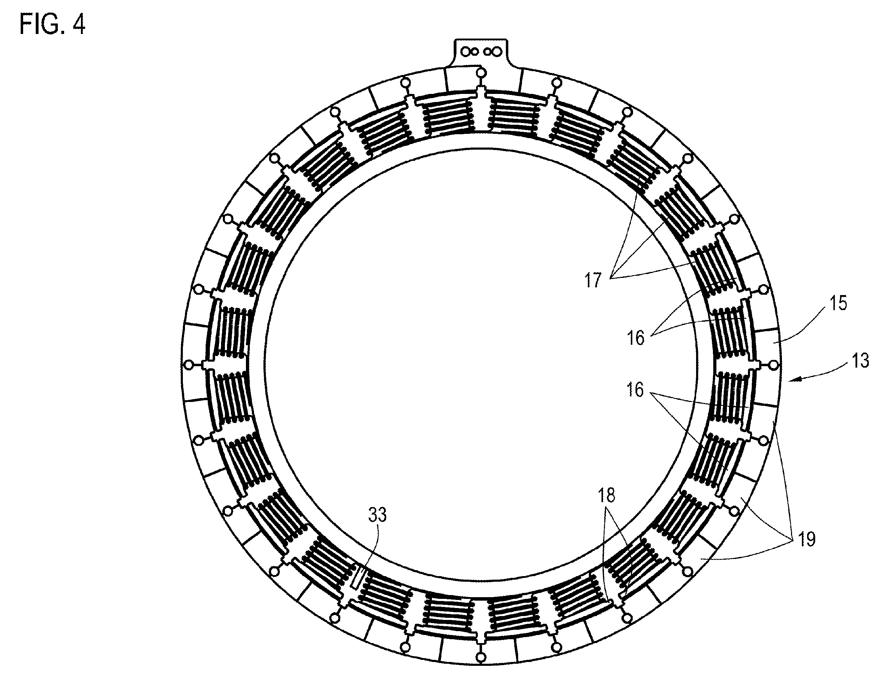

Während die Fig. 1 und 2 einen Hexapod mit Antriebsmitteln bestehend aus Rotor 15 und Stator 14 vom Innenläufertyp zeigen, zeigen die Fig. 3 und 4 einen erfindungsgemäßen Hexapod 1 mit Stator 14 und Rotor 15 in einer Außenläufer-Konfiguration. Der Aufbau des Hexpods 1 auf Fig. 3 und 4 entspricht weitestgehend dem Aufbau des Hexapods 1 aus Fig. 1 und 2, insbesondere was die Aufnahme 2, die Stäbe 4 und deren Lagerung an der Aufnahme 2 sowie an den Halterungen 8 angeht. Anders als beim Ausführungsbeispiel gemäß der Fig. 1 und 2 liegen hier jedoch die Statoren 14 innenseitig, während die Rotoren 15, also die Trägerringe 13 außenseitig, die Statoren 14 umschließend, angeordnet sind. Jeder Stator besteht wiederum aus einem Ring, an dem nun jedoch radial nach außen ragend die Spulenträger 16 angeordnet sind, die wiederum die einzelnen aufgewickelten Spulen 17 tragen. Den Spulenträgern 16 mit ihren endseitigen Abschnitten 18 gegenüberliegend befindet sich der Trägerring 13, also der Rotor 15, auch hier wieder bestehend aus einer Vielzahl einzelner Magnetelemente 19, die zu einer Ringform zusammengesetzt sind. Zur Drehlagerung der einzelnen Trägerringe 13 sind wiederum einzelne Lagermittel 22, beispielsweise wiederum die bereits beschriebenen Kugeln (selbstverständlich sind auch andere Wälzkörper denkbar), vorgesehen, so dass die Trägerringe 13 relativ zueinander einzeln verdreht werden können.

Da die Rotoren 15 respektive Trägerringe 13 bei dieser Ausgestaltung außen liegend sind, müssen die Halterungen 8 folglich auch von außen her zu den Trägerringen 13 geführt werden, weshalb sich der Abschnitt 25 außenseitig erstreckt und in den Befestigungsabschnitt 21 übergeht.

Auch hier ist ein Positionssensor 33, beispielsweise ein Hall-Sensor vorgesehen, der wiederum der Positionserfassung des außen liegenden Rotors 15 dient und mit den Magnetelementen 19 wechselwirkt.

Die Funktionsweise entspricht der bezüglich des Hexapods 1 aus den Fig. 1 und 2 beschriebenen Weise. Durch selektives Bestromen einzelner Spulen 17 erfolgt wiederum die Erzeugung geeigneter Magnetfelder, die durch Wechselwirkung mit den Magnetelementen 19 des Rotors 15 dessen Drehung verursachen, worüber die Verstellung der einzelnen Stäbe 4 und daraus resultierend Aufnahme 2 erfolgt.

Fig. 4 zeigt ein weiteres Ausführungsbeispiel einer Rotor-Stator-Anordnung, wiederum von Innenläufertyp. Der Rotor 15, der hier wiederum identisch mit dem Trägerring 13 ist, ist beispielsweise wiederum aus einzelnen Magnetelementen 19 aufgebaut. Ihm außenseitig gegenüber liegt der Stator 14, an dem eine Vielzahl einzelner Spulen 17 vorgesehen sind, die hier jedoch als Ringspulen gewickelt sind. Anders als bei der zuvor beschriebenen Ausführungsform, bei der die Spulen radial verlaufend gewickelt sind, sind hier die Spulen 17 quasi in Umfangsrichtung gewickelt. Um die erzeugten Magnetfelder bei Bestromung der einzelnen Spulen 17 auf den Rotor 15 koppeln zu können sind entsprechende Joche 26 vorgesehen, die quasi die Innenseite des Stators 14 bilden und die dem Rotor 15 gegenüberliegen. Bei geeigneter Bestromung der Spulen 17 kann auch hier eine beliebige Magnetfeldvariation erreicht werden, die für eine Bewegung der einzelnen Rotoren 15 sorgt.

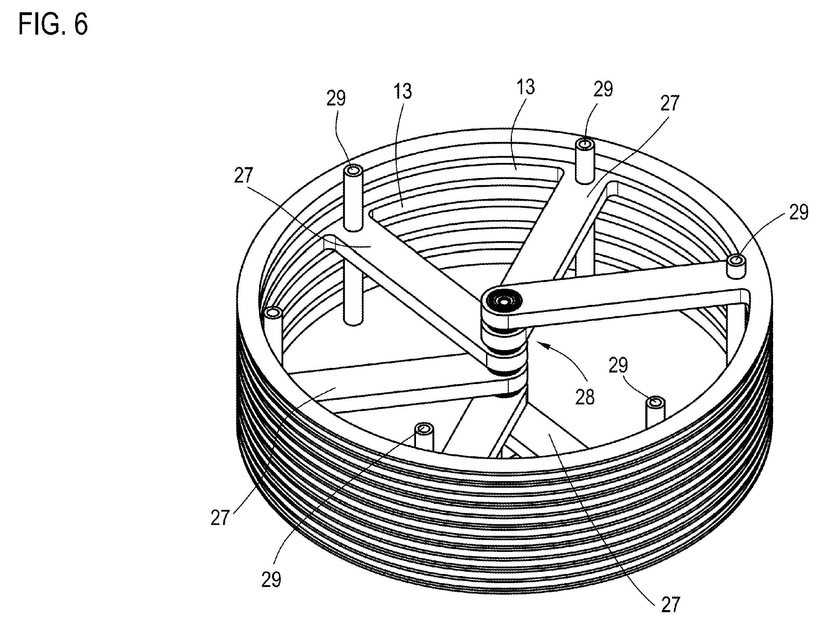

Fig. 6 zeigt als Prinzipdarstellung eine weitere Ausführungs- respektive Lagerungsmöglichkeit der einzelnen Trägerringe 13, wobei hier lediglich die Trägerringe 13, nicht jedoch die zugeordneten Statoren 14 gezeigt sind. Im gezeigten Beispiel weist jeder Trägerring 13 einen nach innen gerichteten Lagerarm 27 auf, wobei alle Lagerarme in der Mitte der Trägerringe 13 enden und an einer gemeinsamen zentralen Lagerstütze 28 über geeignete Lagermittel wie Wälzlager, Rollen und Ähnliches gelagert sind. Hierzu weißt jeder Lagerarm 27 eine geeignete Lagerdurchbrechung auf, die beispielsweise selbst den Außenring eines Wälzlagers bildet, oder in welches ein solcher Außenring oder das Wälzlager selbst eingeschrumpft ist etc. In jedem Fall ist eine einfache Drehlagerung über diese innere Lagerstütze 28 gegeben. An jedem Lagerarm 27 sind ferner Befestigungsaufnahmen 29 für jeweils eine separate, hier nicht näher gezeigte Halterung 8 vorgesehen. Diese kann also drehfest mit dem jeweiligen Trägerring 13 verbunden werden.

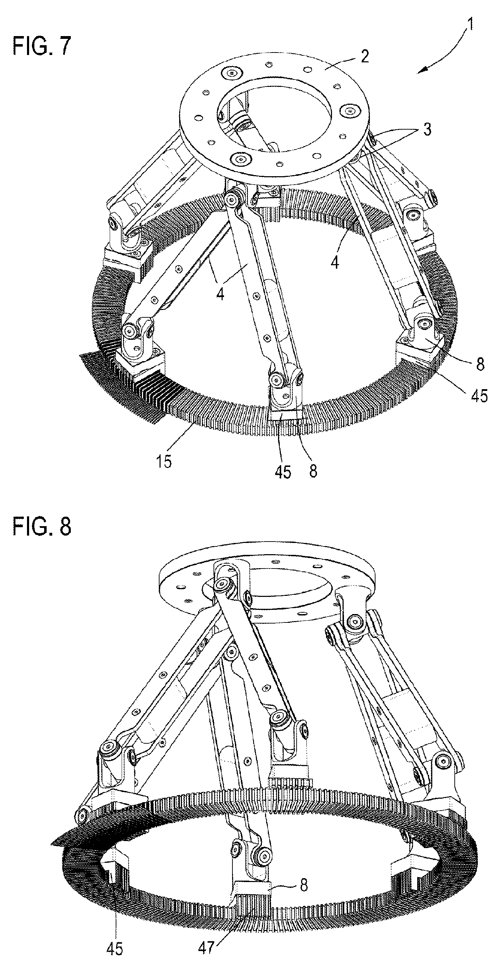

Die Fig. 7 - 10 zeigen ein Beispiel eines Hexpods 1 der zweiten grundlegenden Erfindungsalternative, bei der keine Trägerringe, sondern nur kurz bemessene Trägerringsegmente zum Einsatz kommen, die quasi schwebend oberhalb eines Stators über ein Magnetfeld gehaltert und bewegt werden. Soweit möglich sind für gleiche Bauteile gleiche Bezugszeichen verwendet.

Der erfindungsgemäße Hexpod 1 gemäß dieser Alternative umfasst ebenfalls eine Aufnahme 2, an der in Gelenken 3 beweglich gelagerte Stäbe 4 angeordnet sind. Auch hier sind die Stäbe 4 jeweils in einem ersten Drehgelenk um eine Achse drehgelagert, wobei das Drehgelenk 5 seinerseits um eine zweite Drehachse an der Aufnahme 2 drehgelagert ist. Es ergibt sich also auch hier eine kardanartige Gelenklagerung. Auf die entsprechende Beschreibung bezüglich des Hexapods aus Fig. 1 wird verwiesen.

Auch hier sind die anderen Ende der Stäbe 4 über ein weiteres Gelenk jeweils an Halterungen 8 angeordnet, wobei auch dieses Gelenk wiederum kardanisch ausgeführt ist, vgl. die Beschreibung zum Hexapod 1 nach Fig. 1.

Jede Halterung 8 ist hier jedoch - anders als bei der Ausgestaltung der zuvor beschriebenen Ausführungsformen - auf einem Trägerringsegment 45 angeordnet, das nur ein kurzes Ringsegment ist und mit seiner Breite im Wesentlichen der Halterungsbreite entspricht. Es sind also keine separaten geschlossenen Trägerringe, sondern nur sehr kurze Trägerringsegmente vorgesehen. Die Trägerringsegmente besitzen, querschnittlich gesehen, eine im Wesentlichen L-Form, siehe beispielsweise Fig. 8, mit einem ersten Schenkel 46, der oberhalb des einzigen hier vorgesehenen Stators 14 verläuft, und einem zweiten Schenkel 47, der innenseitig in den Stator 14 eingreift. Ersichtlich laufen bei dieser Ausführungsform alle sechs Trägerringsegmente 45 auf einem gemeinsamen Stator 14.

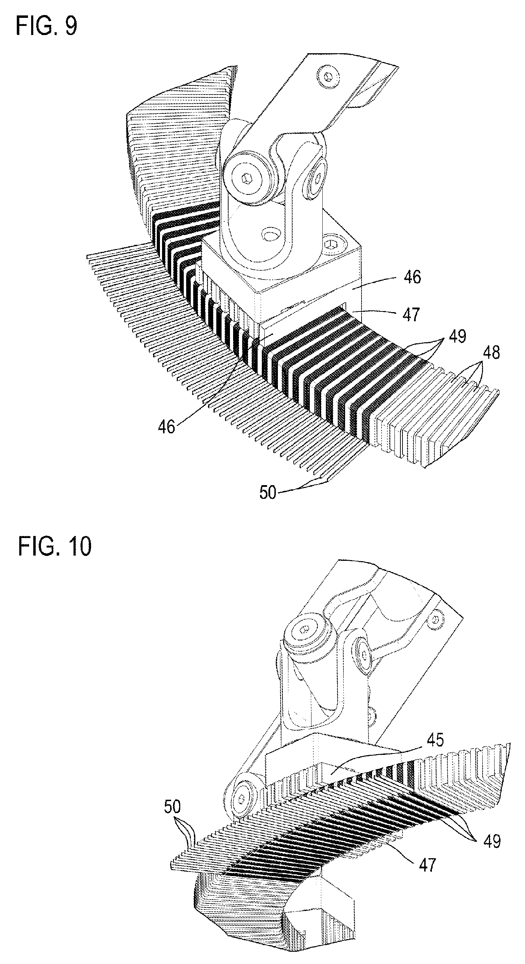

Der Stator 14 weist, siehe Darstellung nach Fig. 9 und 10, eine Nutstruktur auf, d. h., dass eine Vielzahl eingetiefter Nuten 48 vorgesehen sind. In jede dieser radial verlaufenden Nuten ist jeweils eine Spule 49 eingewickelt, die sich folglich ebenfalls radial erstreckt. Jede Spule 49 ist über separate Leitungen 50 bestrombar, kann also bei entsprechender Bestromung ein eigenes Magnetfeld aufbauen. In den Figuren sind aus Gründen der Übersichtlichkeit nur einige Spulen 49 und deren Zudeutungen 50 eingezeichnet, selbstverständlich ist um den gesamten Statorumfang in jeder Nut 48 eine Spule 49 eingewickelt. D. h., dass um den gesamten Statorumfang an beliebigen Positionen beliebige Magnetfelder durch entsprechende Bestromung einer oder mehrerer der Spulen 49 erzeugt werden können.

Diese Magnetfelder wirken nun mit dem jeweiligen Trägerringsegment 45 zusammen. Dieses besteht aus geeignetem Material, beispielsweise kann es aus einer Reihe nebeneinander angeordneter Permanentmagnete bestehen, oder aus sonstigen geeigneten Materialien, die mit den spulenseitig erzeugten Magnetfeldern in einer bestimmten Form wechselwirken können. Die Felder wechselwirken mit beiden Schenkeln 46, 47, woraus eine hohe Steifigkeit in zwei Ebenen erreicht wird. Diese Wechselwirkung gestaltet sich derart, dass über die statorseitig erzeugten Magnetfelder jedes Trägerringsegment 45 über einen schmalen Spalt beabstandet zum Stator 14 geführt wird, d. h., dass jedes Trägerringsegment 45 quasi mit seinem Schenkel 46 oberhalb des Stators 14 schwebt, ohne diesen zu berühren. Letztlich schweben alle Trägerringsegmente 45 oberhalb des Stators 14, so dass insgesamt eine allein über dieses "Grundmagnetfeld" getragene Anordnung gegeben ist. Sie werden also alein durch die statorseitig erzeugten Magnetfelder bzw. deren Wechselwirkung mit den Trägerringsegmenten 45 auf dem Stator gehalten. Lagerelemente sind hier nicht erforderlich.

Die auch hier nicht näher gezeigte Steuerungseinrichtung, die den gesamten Bestromungsbetrieb der einzelnen Spulen 49 steuert, steuert diese z. B. nun derart an, dass zum einen dieses Grundmagnetfeld, das die Trägerringsignale 45 auf einer definierten Distanz zum Stator 14 hält, erzeugt. Zum anderen wird über die Steuerungseinrichtung der Bestromungsbetrieb auch derart angesteuert, dass das sich für eine Bewegung eines Trägerringsegments 45 längs der Statorringbahn ein Wandermagnetfeld ergibt, d. h., dass je nach gewünschter umfangsmäßiger Verschiebestrecke ein Magnetfeld erzeugt wird, das mit dem Trägerringsegment 45, das zu bewegen ist, wechselwirkt und längs dieser Verschiebestrecke statorseitig wandert und das Trägerringsegment 45 mitschleppt. Jedes Trägerringsegment 45 bildet folglich den Läufer eines Linearmotors, dessen zweites Bauteil der Stator 14 ist. D. h., dass das hier beschriebene Antriebsprinzip das eines Linearmotors ist, der hier jedoch zu einer Ringbahn geschlossen wurde, auf der die relativ kurz bemessenen Trägerringsegmente 45, also die einzelnen Läufer, laufen.

Die Erzeugung eines konstant anliegenden Grundmagnetfelds ist jedoch nicht zwingend erforderlich. Vielmehr ist es ebenso denkbar, lediglich lokale Felder dort zu erzeugen, wo sich gerade ein Trägerringsegment 45 befindet, so dass dieses über das lokal erzeugte Magnetfeld schwebt. Dieses lokal erzeugte Magnetfeld kann zur Trägerringsegmentbewegung entsprechend längs des Stators wandern, wozu die einzelnen Spulenwicklungen entsprechend variierend angesteuert werden. D. h., dass nur die Spulen 49 bestromt werden, die zur Magnetfelderzeugung in Abhängigkeit der Position des jeweiligen Trägerringsegments 45 auch tatsächlich angesteuert werden müssen, um das lokale Magnetfeld zu erzeugen. Die grundsätzliche Erfassung, welche Spule 49 hierzu zu bestromen sind, bzw. grundsätzlich die Positionserfassung eines Trägerringsegments 45 kann durch geeignete Positionssensoren, die bevorzugt statorseitig vorgesehen sind, erfolgen. Dies gilt für alle dieses Funktionsprinzip aufweisenden Ausführungen. Auch hier können wiederum Hall-Sensoren oder Ähnliches verwendet werden. Gegebenenfalls kann die Position eines Trägerringsegments 45 aber auch allein regelungstechnisch erfasst werden, da es aufgrund der Wechselwirkung zwischen Rotor und Statorfeld stets zu erfassbaren Feldvariationen in dem Bereich, wo eben ein Trägerringsegment 45 angeordnet ist, kommt, was steuerungseinrichtungsseitig zur Positionsbestimmung erfasst und ausgewertet werden kann

Ersichtlich ist es bei dieser Erfindungsausgestaltung also möglich, die einzelnen Trägerringsegmente 45 und damit die Halterungen 8 und mit ihnen die Raumlagen der einzelnen mit ihnen gekoppelten Stäbe 4 wiederum beliebig zu verändern, indem die Trägerringsegmente 45 innerhalb des jeweils möglichen umfangsmäßigen Bewegungswegs beliebig positioniert werden können. Bei einer simultanen Bewegung aller Trägerringsegmente 45 sind selbstverständlich beliebig häufige 360°-Drehungen möglich, nachdem auch hier keinerlei Verbindungsleitungen und Ähnliches zu den Trägerringsegmenten 45 oder allgemein rotierenden Teilen des Hexapods geführt werden. Die einzigen Leitungsverbindungen sind die unbewegten Leitungen 45 zu den Spulen 49. Bei dem beschriebenen Ausführungsbeispiel laufen wie beschrieben alle sechs Trägerringsegmente 45 auf einem gemeinsamen Stator 14. Da jedes Trägerringsegment 45 separat verschoben werden kann, aber auch alle Trägerringsegmente 45 simultan um 360° rotieren können, sind folglich im gezeigten Ausführungsbeispiel sechs separate virtuelle Ringbahnen gegeben, um welche regelungstechnisch sechs separate wandernde Magnetfelder laufen, d. h., dass sechs separate rotierende Magnetfelder erzeugt werden müssen um jedes einzelne Trägerringsegment 45 um 360° bewegen zu können. Dies ist durch geeignete Ansteuerung der einzelnen Spulen 49, also der einzelnen Statorwicklungen ohne weiteres möglich. Bei entsprechend dichter Packung lassen sich sehr exakt und scharf begrenzte Magnetfelder aufbauen, die die Trägersegmentführung übernehmen.

Das hier also erfindungsgemäß realisierte Antriebsprinzip ist das eines Drehfeldlinearmotors (Magnetschwebebahn), der hier zu einer Ringform geschlossen ist. Wenngleich im gezeigten Beispiel alle sechs Trägerringsegmente 45 auf einem gemeinsamen Stator 14 laufen, ist es selbstverständlich denkbar, beispielsweise auf einem Stator 14 nur zwei Trägerringsegmente 45 laufen zu lassen, so dass insgesamt drei separate Statoren 14 mit jeweils zwei darauf laufenden Trägerringsegmenten 45 vorgesehen werden. Alternativ können auch an einem Stator 14 drei Trägerringsegmente 45 laufen, so dass nur zwei Statoren 14 vorzusehen sind. Die am wenigstens Bauteile und folglich einfachste Ausgestaltung ist jedoch die in den Figuren 7 - 10 gezeigt Ausführung, die jedoch, da sechs separate rotierende Felder zum Antrieb über einen gemeinsamen Stator 14 erzeugt werden müssen, regelungstechnisch etwas aufwendiger ist.

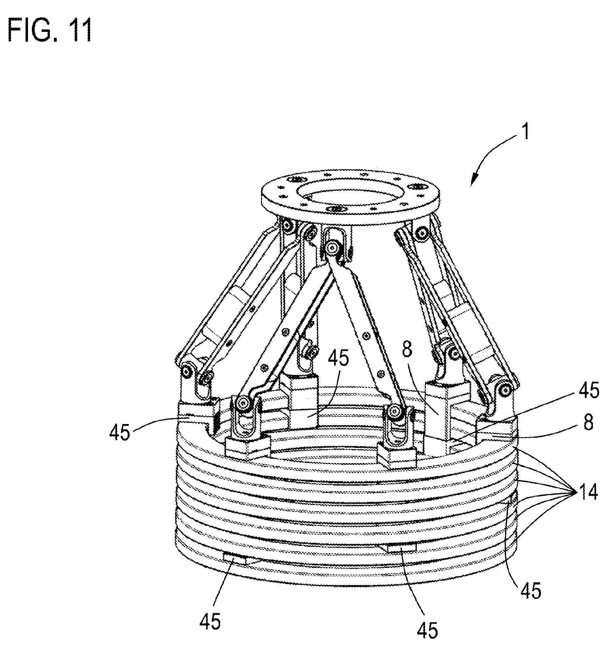

Fig. 11 zeigt gegenüber der zuvor beschriebenen Ausführungsform einen Hexapod 1, der mit dem gleichen Linearmotorprinzip arbeitet, bei dem jedoch insgesamt sechs separate Statoren 14 vorgesehen sind, die jeweils ein Trägerringsegment 45 tragen bzw. führen. Die Trägerringsegmente 45 sind hier mit den jeweiligen Halterungen 8 verbunden, die sich über die benötigte axiale Länge in den hier konzentrischen Aufbau erstrecken, so dass an ihrem Ende befindliches Trägerringsegment 45 in der richtigen Position ist. Auch hier erfolgt die Bewegung der einzelnen Trägerringsegmente 45 und damit der Stäbe über einzelne statorseitig erzeugte rotierende Magnetfelder, wie zuvor beschrieben.

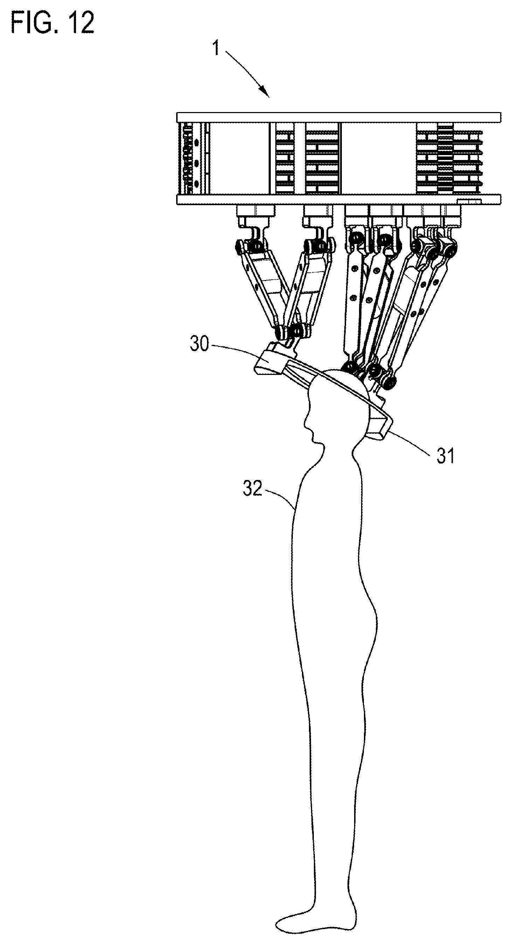

Die Fig. 12 - 17 zeigen verschiedene Einsatzbeispiele eines erfindungsgemäßen Hexapods 1. Wenngleich in diesen Figuren jeweils ein Hexapod 1 umfassend geschlossene Trägerringe gezeigt ist, kann es sich bei dem Hexapod 1 natürlich auch um einen Hexapod mit einzelnen Trägerringsegmenten handeln, mit einem Stator, wie exemplarisch in den Fig. 7 - 10 gezeigt, oder mit mehreren Statoren, wie dazu alternativ beschrieben.

Fig. 12 zeigt ein erstes Einsatzbeispiel eines erfindungsgemäßen Hexapods 1. An der hier ringförmigen Aufnahme 2 ist eine Strahlungsquelle 30 und ein Strahlungsempfänger 31 einander gegenüberliegend angeordnet. Die Strahlungsquelle ist beispielsweise eine Röntgenröhre, der Strahlungsempfänger 31 ein Röntgenstrahlungsempfänger. Ein Objekt 32 wird in die ringförmige Aufnahme 2 bewegt bzw. die Aufnahme 2 über das Objekt bewegt. Da der Hexapod selber eine offene Ringkonfiguration aufweist, kann das Objekt 2 auch durch den Hexapod selbst bewegt werden, weshalb auch längere Objekte bearbeitet werden können. Im Rahmen der Bildaufnahme kann die Aufnahme 2 und mithin die Strahlungsquelle 30 und der Strahlungsempfänger 31 verkippt werden, so dass unterschiedliche Bildebenenstellungen relativ zum Objekt 32 eingenommen werden können, wie natürlich auch die Aufnahme 2 unbegrenzt um 360° um das Objekt 32 rotieren kann.

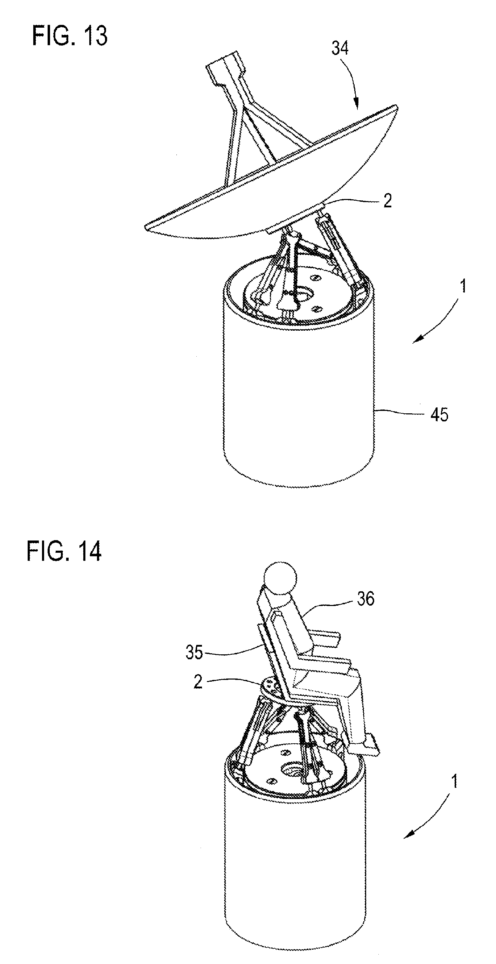

Fig. 13 zeigt ein zweites Beispiel einer Einsatzmöglich des erfindungsgemäßen Hexapods 1. Dieser dient hier zur Verstellung einer Satelliten- oder Antennenschüssel 34, die an der Aufnahme 2 angeordnet ist. Der Hexapod 1 weist hier ein Außengehäuse 35 auf, das ihn nach außen kapselt. Die Satelliten- oder Antennenschüssel 34 kann beliebig im Raum verstellt und über den positionsfesten Hexapod 1 beliebig bezüglich eines Fixpunktes ausgerichtet werden.

Fig. 14 zeigt eine dritte Einsatzmöglichkeit des erfindungsgemäßen Hexapods 1, der hier der Bewegungssimulation dient. Auf der Aufnahme 2 ist hier ein Stuhl 35 angeordnet, auf dem im gezeigten Beispiel eine Person 36 Platz genommen hat. Zur Bewegungssimulation, beispielsweise in Verbindung mit einer Spielkonsole oder einem 3D-Kino zur Effektsimulation oder bei Flug- oder Fahrsimulatoren, wird der Sitz 35 über den Hexapod 1 bewegt, er kann gedreht und gekippt werden, um die gewünschte Bewegung zu simulieren.

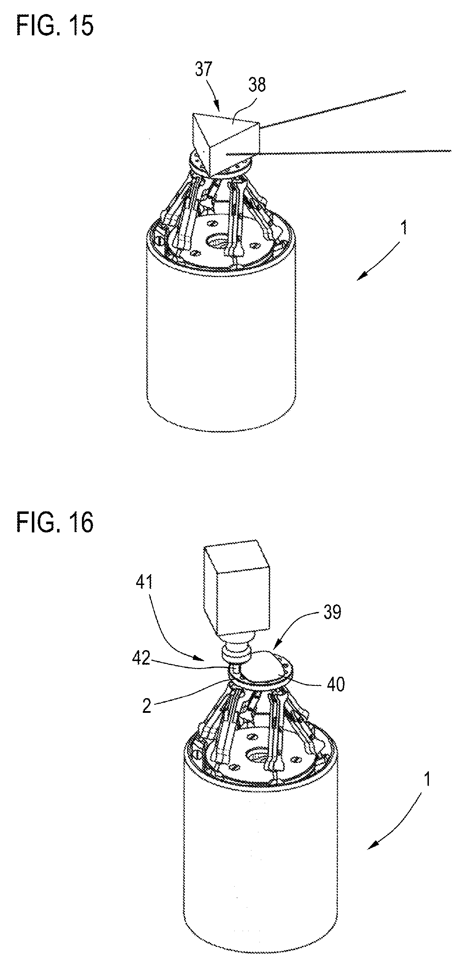

Fig. 15 zeigt den Einsatz des erfindungsgemäßen Hexapods 1 als Träger und gleichzeitig Verstellelement für eine optische Komponente 37 hier im Form eines Prismas 38, das beispielsweise als Ablenkelement für einen Laserstrahl und Ähnliches dient. Das Prisma 38 ist nur ein Beispiel, selbstverständlich können auch beliebig andere optische Elemente wie Spiegel oder Linsen und Ähnliches über den Hexapod 1 verstellt werden.

Fig. 16 zeigt den Einsatz des erfindungsgemäßen Hexapods 1 als Träger und Verstellelement für ein zu bearbeitendes Werkstück 39, hier einer zu schleifenden optischen Linse 40. Das Werkstück 39 ist an der Aufnahme 2 über eine geeignete Halterung fixiert. Über den Hexapod 1 wird die das Werkstück 39 relativ zu einem feststehenden Werkzeug 41, hier einem Linsenschleifer 42, bewegt, so dass dieser das Werkstück 39 beispielsweise schleifen kann. Denkbar ist es selbstverständlich auch als Werkstück 39 beispielsweise ein Metallbauteil anzuordnen, das über das Werkzeug 41 spanabhebend bearbeitet wird. Auch kann es sich bei dem Werkzeug 41 beispielsweise um einen Laser handeln, oder um ein Werkzeug, über das beispielsweise ein Klebstoff und Ähnliches appliziert wird. D. h., dass das Werkzeug 41 beliebig sein kann respektive die mit ihm durchgeführte Aktion am Werkstück 39, wie auch das Werkstück 39 beliebig sein kann. Grundlegend ist jedoch, dass das Werkstück 39 über den Hexapod 1 am Werkzeug 41 vorbeibewegt wird.

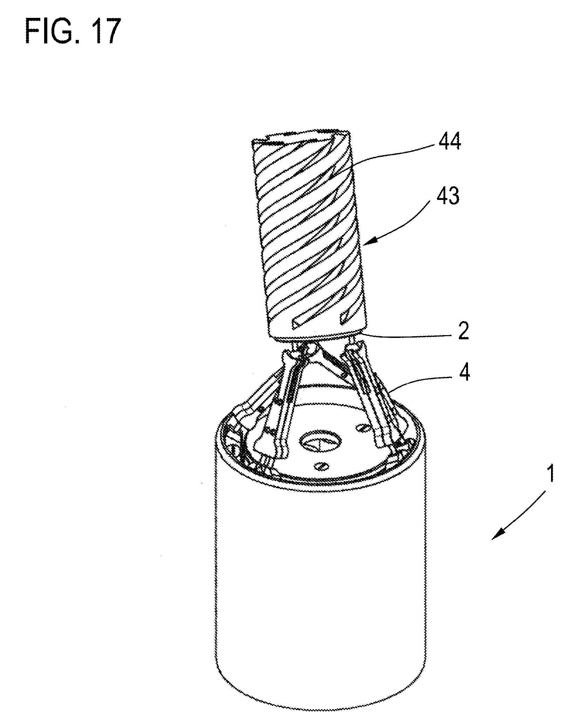

Fig. 17 zeigt schließlich ein Ausführungsbeispiel einer Einsatzmöglichkeit des erfindungsgemäßen Hexapods 1 als Träger für ein Werkzeug 43, hier beispielsweise in Form eines Fräsers 44. Das Werkzeug 43 wird direkt auf der Aufnahme 2 des Hexapods 1 befestigt und kann durch Rotation der Stäbe 4 und damit der Aufnahme 2 mit hoher Geschwindigkeit gedreht werden, unter Beibehaltung der zuvor eingestellten räumlichen Orientierung. D. h., dass durch die Eigenrotation das Bearbeiten eines lagefesten Werkstücks möglich ist. Ferner kann durch die Verstellung der Stäbe 4 auch die Hüllkurve, die das Werkzeug im Rahmen einer Raumbewegung beschreibt, während der Hauptdrehung verändert werden, d. h., dass bei laufender Drehung des Werkzeugs 43 dieses räumlich bewegt und entlang eines lagefesten Werkstücks verfahren werden kann.

Die Einsetzbarkeit des erfindungsgemäßen Hexapods 1 ist auf die beschriebenen Ausführungsbeispiele nicht begrenzt, weder hinsichtlich der Einsatzbereiche noch der konkreten Bauform des Hexapods, der in jeder erfindungsgemäßen Bauform realisiert sein kann. Vielmehr kann der Hexapod 1 zur Bewegung beliebigster Gegenstände im Raum verwendet werden, unabhängig letztlich von deren Größe, da der Hexapod 1 seinerseits beliebig groß und leistungsfähig ausgelegt werden kann. Er kann kleinformatig mit einem Durchmesser von beispielsweise nur wenigen zehn Zentimetern sein, kann jedoch auch einen Durchmesser von über einem oder mehreren Metern besitzen, je nach zu bewegendem Gegenstand respektive der vorzunehmenden Stellaufgabe.

## Patentansprüche

1. Hexapod, umfassend eine vorzugsweise plattenförmige Aufnahme, an der wenigstens fünf, vorzugsweise sechs in Gelenken gelagerte Stäbe angeordnet sind, wobei jeder Stab mit seinem anderen Ende gelenkig an einer Halterung angeordnet ist, wobei alle Halterungen längs einer Kreisbahn bewegbar sind, **dadurch gekennzeichnet, dass** jede Halterung (8) an einem separaten Trägerring (13) angeordnet ist, wobei der jeweilige Trägerring (13) samt der an ihm angeordneten Halterung (8) bewegbar ist, und dass jeder Trägerring (13) den Rotor (15) oder einen Teil eines Rotors (15) eines elektromotorischen Antriebsmittels umfassend weiterhin einen dem jeweiligen Trägerring (13) zugeordneten ringförmigen Stator (14) bildet.

2. Hexapod nach Anspruch 1, **dadurch gekennzeichnet, dass** die Trägerringe (13) konzentrisch übereinander angeordnet oder konzentrisch ineinanderliegend angeordnet sind, oder dass die Trägerringe (13) vertikal und radial versetzt zueinander angeordnet sind.

3. Hexapod nach Anspruch 1 oder 2, **dadurch gekennzeichnet, dass** jeder Rotor (15) innerhalb des ihm zugeordneten Stators (14) angeordnet ist, oder dass der Stator (14) innerhalb des ihm zugeordneten Rotors (13) angeordnet ist.

4. Hexapod nach einem der vorangehenden Ansprüche, **dadurch gekennzeichnet, dass** die Trägerringe (13) über Lagermittel (22) an einem oder mehreren feststehenden Bauteilen gelagert sind, oder dass sie über zwischen ihnen angeordnete Lagermittel (22) gelagert sind.

5. Hexapod nach Anspruch 4, **dadurch gekennzeichnet, dass** das oder ein feststehendes Bauteil der jeweilige Stator (14) ist.

6. Hexapod nach einem der Ansprüche 1 bis 4, **dadurch gekennzeichnet, dass** die Trägerringe (13) jeweils einen Lagerarm (27) aufweisen, wobei alle Lagerarme (27) über Lagermittel an einer gemeinsamen zentralen Lagerstütze (28) gelagert sind.

7. Hexapod nach einem der vorangehenden Ansprüche, **dadurch gekennzeichnet, dass** am Stator (14) eine Vielzahl separat bestrombarer Spulen (17) zur Erzeugung eines mit dem Rotor (15) wechselwirkenden Magnetfelds vorgesehen sind.

8. Hexapod, umfassend eine vorzugsweise plattenförmige Aufnahme, an der wenigstens fünf, vorzugsweise sechs in Gelenken gelagerte Stäbe angeordnet sind, wobei jeder Stab mit seinem anderen Ende gelenkig an einer Halterung angeordnet ist, wobei alle Halterungen längs einer Kreisbahn bewegbar sind, **dadurch gekennzeichnet, dass** jede Halterung (8) an einem separaten Trägerringsegment (45) angeordnet ist, wobei das jeweilige Trägerringsegment (45) samt der an ihm angeordneten Halterung (8) bewegbar ist, und dass jedes Trägerringsegment (45) den Rotor oder einen Teil eines Rotors eines elektromotorischen Antriebsmittels umfassend weiterhin mindestens einen den Trägerringsegmenten (45) zugeordneten ringförmigen Stator (14) bildet, wobei am Stator (14) eine Vielzahl separat bestrombarer Spulen (17) zur Erzeugung eines mit dem Rotor (15) wechselwirkenden Magnetfelds vorgesehen sind

9. Hexapod nach Anspruch 8, **dadurch gekennzeichnet, dass** mehreren Trägerringsegmenten (45) ein gemeinsamer Stator (14) zugeordnet ist, oder dass allen Trägerringsegmenten (45) ein gemeinsamer Stator (14) zugeordnet ist.

10. Hexapod nach Anspruch 8 oder 9, **dadurch gekennzeichnet, dass** jedes Trägerringsegment (45) vertikal gesehen oberhalb des Stators (14) über ein zwischen Trägerringsegment (45) und Stator (14) wirkendes Magnetfeld schwebt.

11. Hexapod nach einem der Ansprüche 8 bis 10, **dadurch gekennzeichnet, dass** jedes Trägerringsegment (45) eine L-Form aufweist, mit einem ersten Schenkel (46), der oberhalb des Stators (14) liegt, und einem zweiten Schenkel (47), der den Stator (14) am Innenumfang oder am Außenumfang umgreift.

12. Hexapod nach einem der Ansprüche 8 - 11, **dadurch gekennzeichnet, dass** am Trägerring (13) oder am Trägerringsegment eine Vielzahl an in ringförmiger oder ringsegmentförmiger Konfiguration angeordneter, mit dem statorseitig erzeugten Magnetfeld wechselwirkender Magnetelemente (19) vorgesehen sind, oder dass der Trägering (13) oder das Trägeringsegment selbst aus diesen Magnetelementen (19) gebildet ist.

13. Hexapod nach einem der vorangehenden Ansprüche, **dadurch gekennzeichnet, dass** jedem Trägerring (13) oder Trägeringsegment wenigstens ein Positionssensor (30) zur Erfassung der Position des Rotors (15) relativ zum Stator (14) zugeordnet ist.

14. Hexapod nach Anspruch 13, **dadurch gekennzeichnet, dass** als Positionssensoren (30) statorseitig angeordnete Hall-Sensoren vorgesehen sind, die mit am jeweiligen Trägering (13) oder Trägerringsegment befindlichen signalgebenden Elementen zusammenwirken.

15. Hexapod nach Anspruch 14, **dadurch gekennzeichnet, dass** die signalgebenden Elemente die trägerring- oder trägerringsegmentseitig vorgesehenen Magnetelemente (19) selbst sind.

16. Hexapod nach einem der vorangehenden Ansprüche, **dadurch gekennzeichnet, dass** eine gemeinsame, die einzelnen Antriebsmittel steuernde Steuerungseinrichtung vorgesehen ist.

## Claims

1. Hexapod comprising a preferably plate-like receptacle on which at least five, preferably six, bars which are mounted in joints are arranged, wherein each bar is arranged, by way of its other end, on a holder in an articulated manner, wherein all of the holders can be moved along a circular path, **characterized in that** each holder (8) is arranged on a separate carrier ring (13), wherein the respective carrier ring (13), together with the holder .(8) which is arranged on it, can be moved, and **in that** each carrier ring (13) forms the rotor (15) or a portion of a rotor (15) of an electromotive drive means further comprising an annular stator (14) which is associated with the respective carrier ring (13).

2. Hexapod according to Claim 1, **characterized in that** the carrier rings (13) are arranged concentrically one above the other or are arranged concentrically one in the other, or **in that** the carrier rings (13) are arranged vertically and radially offset in relation to one another.

3. Hexapod according to Claim 1 or 2, **characterized in that** each rotor (15) is arranged within the stator (14) which is associated with it, or **in that** the stator (14) is arranged within the rotor (13) which is associated with it.

4. Hexapod according to one of the preceding claims, **characterized in that** the carrier rings (13) are mounted on one or more stationary components by means of bearing means (22), or **in that** the said carrier rings are mounted by means of bearing means (22) which are arranged between them.

5. Hexapod according to Claim 4, **characterized in that** the or a stationary component is the respective stator (14).

6. Hexapod according to one of Claims 1 to 4, **characterized in that** the carrier rings (13) each have a bearing arm (27), wherein all of the bearing arms (27) are mounted on a common central bearing support (28) by means of bearing means.

7. Hexapod according to one of the preceding claims, **characterized in that** a large number of coils (17), to which current can be applied separately, for generating a magnetic field which interacts with the rotor (15) are provided on the stator (14).

8. Hexapod comprising a preferably plate-like receptacle on which at least five, preferably six, bars which are mounted in joints are arranged, wherein each bar is arranged, by way of its other end, on a holder in an articulated manner, wherein all of the holders can be moved along a circular path, **characterized in that** each holder (8) is arranged on a separate carrier ring segment (45), wherein the respective carrier ring segment (45), together with the holder (8) which is arranged on it, can be moved, and **in that** each carrier ring segment (45) forms the rotor or a portion of a rotor of an electromotive drive means further comprising at least one annular stator (14) which is associated with the carrier ring segments (45), wherein a large number of coils (17), to which current can be applied separately, for generating a magnetic field which interacts with the rotor (15) are provided on the stator (14).

9. Hexapod according to Claim 8, **characterized in that** a common stator (14) is associated with a plurality of carrier ring segments (45), or **in that** a common stator (14) is associated with all of the carrier ring segments (45).

10. Hexapod according to Claim 8 or 9, **characterized in that** each carrier ring segment (45) floats above the stator (14), as seen vertically, by means of a magnetic field which acts between the carrier ring segment (45) and the stator (14).

11. Hexapod according to one of Claims 8 to 10, **characterized in that** each carrier ring segment (45) has an L-shape having a first limb (46) which is situated above the stator (14) and having a second limb (47) which surrounds the stator (14) at the inner circumference or at the outer circumference.

12. Hexapod according to one of Claims 8-11, **characterized in that** a large number of magnet elements (19) which are arranged with an annular or ring-segment-shaped configuration and interact with the magnetic field which is generated on the stator side are provided on the carrier ring (13) or on the carrier ring segment, or **in that** the carrier ring (13) or the carrier ring segment itself is formed from these magnet elements (19).

13. Hexapod according to one of the preceding claims, **characterized in that** at least one position sensor (30) for detecting the position of the rotor (15) relative to the stator (14) is associated with each carrier ring (13) or carrier ring segment.

14. Hexapod according to Claim 13, **characterized in that** the position sensors (30) provided are Hall sensors which are arranged on the stator side and which interact with signal-transmitting elements which are located on the respective carrier ring (13) or carrier ring segment.

15. Hexapod according to Claim 14, **characterized in that** the signal-transmitting elements are the magnet elements (19), which are provided on the carrier-ring side or carrier ring-segment side, themselves.

16. Hexapod according to one of the preceding claims, **characterized in that** a common control device which controls the individual drive means is provided.

## Revendications

1. Hexapode, comprenant un logement de préférence en forme de plaque au niveau duquel sont disposées cinq, de préférence six, barres supportées dans des articulations, chaque barre étant disposée avec son autre extrémité de manière articulée à une fixation, toutes les fixations pouvant être déplacées le long d'une piste circulaire, **caractérisé en ce que** chaque fixation (8) est disposée au niveau d'une bague de support séparée (13), la bague de support respective (13) pouvant être déplacée conjointement avec la fixation (8) disposée sur elle, et **en ce que** chaque bague de support (13) forme le rotor (15) ou une partie d'un rotor (15) d'un moyen d'entraînement par moteur électrique comprenant en outre un stator (14) de forme annulaire associé à la bague de support respective (13).

2. Hexapode selon la revendication 1, **caractérisé en ce que** les bagues de support (13) sont disposées les unes au-dessus des autres de manière concentrique ou sont disposées les unes dans les autres de manière concentrique, ou **en ce que** les bagues de support (13) sont disposées de manière décalée verticalement et radialement les unes par rapport aux autres.

3. Hexapode selon la revendication 1 ou 2, **caractérisé en ce que** chaque rotor (15) est disposé à l'intérieur du stator (14) qui lui est associé, ou **en ce que** le stator (14) est disposé à l'intérieur du rotor (13) qui lui est associé.

4. Hexapode selon l'une quelconque des revendications précédentes, **caractérisé en ce que** les bagues de support (13) sont supportées par le biais de moyens de palier (22) sur un ou plusieurs composants fixes ou **en ce qu'**elles sont supportées par le biais de moyens de palier (22) disposés entre elles.

5. Hexapode selon la revendication 4, **caractérisé en ce que** le ou un composant fixe est le stator respectif (14).

6. Hexapode selon l'une quelconque des revendications 1 à 4, **caractérisé en ce que** les bagues de support (13) présentent à chaque fois un bras de palier (27), tous les bras de palier (27) étant supportés par le biais de moyens de palier sur un appui de palier central commun (28).

7. Hexapode selon l'une quelconque des revendications précédentes, **caractérisé en ce qu'**une pluralité de bobines (17) pouvant être alimentées en courant séparément sont prévues au niveau du stator (14) pour générer un champ magnétique entrant en interaction avec le rotor (15).

8. Hexapode, comprenant un logement de préférence en forme de plaque au niveau duquel sont disposées cinq, de préférence six, barres supportées dans des articulations, chaque barre étant disposée avec son autre extrémité de manière articulée à une fixation, toutes les fixations pouvant être déplacées le long d'une piste circulaire, **caractérisé en ce que** chaque fixation (8) est disposée au niveau d'un segment de bague de support séparé (45), le segment de bague de support respectif (45) pouvant être déplacé conjointement avec la fixation (8) disposée sur lui, et **en ce que** chaque segment de bague de support (45) forme le rotor ou une partie d'un rotor d'un moyen d'entraînement par moteur électrique comprenant en outre au moins un stator (14) de forme annulaire associé aux segments de bague de support (45), une pluralité de bobines (17) pouvant être alimentées en courant de manière séparée étant prévues au niveau du stator (14) pour générer un champ magnétique entrant en interaction avec le rotor (15).

9. Hexapode selon la revendication 8, **caractérisé en ce qu'**un stator commun (14) est associé à plusieurs segments de bague de support (45) ou **en ce qu'**un stator commun (14) est associé à la totalité des segments de bague de support (45).

10. Hexapode selon la revendication 8 ou 9, **caractérisé en ce que** chaque segment de bague de support (45), vu verticalement, est en suspension au-dessus du stator (14) par le biais d'un champ magnétique agissant entre le segment de bague de support (45) et le stator (14).

11. Hexapode selon l'une quelconque des revendications 8 à 10, **caractérisé en ce que** chaque segment de bague de support (45) présente une forme en L, avec une première branche (46) qui est située au-dessus du stator (14) et une deuxième branche (47) qui vient en prise autour du stator (14) au niveau de la périphérie intérieure ou au niveau de la périphérie extérieure.

12. Hexapode selon l'une quelconque des revendications 8 à 11, **caractérisé en ce qu'**une pluralité d'éléments magnétiques (19) disposés dans une configuration annulaire ou en forme de segment de bague, entrant en interaction avec le champ magnétique généré du côté du stator, sont prévus au niveau de la bague de support (13) ou au niveau du segment de bague de support, ou **en ce que** la bague de support (13) ou le segment de bague de support est elle-même ou lui-même formé(e) de ces éléments magnétiques (19).

13. Hexapode selon l'une quelconque des revendications précédentes, **caractérisé en ce qu'**au moins un capteur de position (30) pour détecter la position du rotor (15) par rapport au stator (14) est associé à chaque bague de support (13) ou à chaque segment de bague de support.

14. Hexapode selon la revendication 13, **caractérisé en ce que** l'on prévoit en tant que capteur de position (30) des capteurs de Hall disposés du côté du stator, qui coopèrent avec des éléments générateurs de signaux se trouvant au niveau de la bague de support respective (13) ou du segment de bague de support respectif.

15. Hexapode selon la revendication 14, **caractérisé en ce que** les éléments générateurs de signaux sont les éléments magnétiques (19) eux-mêmes, qui sont prévus du côté de la bague de support ou du côté du segment de bague de support.

16. Hexapode selon l'une quelconque des revendications précédentes, **caractérisé en ce qu'**il est prévu un dispositif de commande commun commandant les moyens d'entraînement individuels.
